# EUROPEAN PATENT SPECIFICATION

(11) **EP 2 498 518 B1**
(45) Date of publication and mention of the grant of the patent: **10.07.2019**
(21) Application number: 10827141.2
(22) Date of filing: 29.10.2010
(51) Int. Cl.: H04W 4/02, G06Q 50/00, H04W 64/00, G06F 3/12, H04L 29/08, G06Q 30/02, H04N 21/2668, H04N 21/258, H04N 21/41, H04W 4/021, G06F 16/9537, H04W 4/18, H04W 8/24

(54) **MOBILE DEVICE, SERVER, AND CONTENT MANAGEMENT METHOD FOR A SYSTEM COMPRISING SAME**
MOBILE VORRICHTUNG, SERVER UND INHALTSVERWALTUNGSVERFAHREN FÜR EIN SYSTEM DAMIT
DISPOSITIF MOBILE, SERVEUR, ET PROCÉDÉ DE GESTION DE CONTENU POUR UN SYSTÈME COMPRENANT CES ÉLÉMENTS

(30) Priority: 02.11.2009 KR 20090105080
(43) Date of publication of application: 12.09.2012
(73) Proprietor: Samsung Electronics Co., Ltd., Suwon-si, Gyeonggi-do, 443-742 (KR)
(72) Inventor: LEE, Jong-rim, Seoul 135-230 (KR); SUNG, Ju-yun, Yongin-si Gyeonggi-do 446-910 (KR); CHOO, Hee-jeong, Anyang-si Gyeonggi-do 431-060 (KR); LEE, Keum-koo, Seongnam-si Gyeonggi-do 463-500 (KR); KWAHK, Ji-young, Seongnam-si Gyeonggi-do 463-020 (KR)
(74) Representative: HGF Limited
(86) International application number: PCT/KR2010/007553
(87) International publication number: WO 2011/053057

(56) References cited:
- JP-A- 2002 259 089
- JP-A- 2009 139 991
- KR-B1- 100 718 795
- KR-B1- 100 726 075
- US-A1- 2001 029 531
- US-A1- 2002 115 451
- US-A1- 2002 133 545
- US-A1- 2007 124 436
- US-A1- 2007 299 681
- US-A1- 2009 187 466

## Description

### [Technical Field]

The present general inventive concept relates generally to a method for managing contents of a mobile device, a server, and a system. More particularly, the present general inventive concept relates to a method for managing contents of a mobile device, a server, and a system so that the server provides adequate contents to the mobile device connected over a communication network such as Internet.

### [Background Art]

Thanks to recent advances of communication technologies, a user can download various contents using a mobile device. For example, the user can download contents such as music or game by use of a mobile phone. Using the mobile device, the user may download necessary data by accessing a server.

As such, the user can download various contents using the mobile device, whereas it is quite complicated to download the intended content according to a situation. Particularly, since the mobile device is small in size, contents represented on its screen are small. Hence, the user can access the server, search for the intended content, and then download the content through a number of steps using the mobile device.

The user wants to download the contents in a simple manner. Accordingly, what is needed is a method for easily downloading the contents according to the situation using the mobile device.

US 2002/133545 A1 refers to a mobile device which communicates with local and remote service providers to provide location service channels. JP 2009139991 A refers to a print request terminal which stores print data that it can be printed at a printer operated by a user. JP 2002259089 A refers to a radio communication network system for automatically performing the work of acquiring and setting a printer driver. US 2007/124436 A1 refers to a print server which is configured to track the global position of a mobile computing device and determine a print location based upon the position. US 2007/299681 A1 refers to a system which, upon detecting a computing device of a user within a predefined proximity, causes a media server to provide the user with access to a corresponding user profile maintained by the media server. US 2001/029531 A1 refers to a remote printing system which allows a user to send a hard copy to another via a portable digital device such as a cellular phone. US 2009/187466 A1 refers to a system in which sales information corresponding to retailers is collected and stored so that a customer can access the sales information using a client application running on a mobile device.. US 2002/115451 A1 refers to a data output system which can control a printer in accordance with the position of a user.

### [Disclosure]

### [Technical Problem]

An aspect of the present general inventive concept has been provided to solve the above-mentioned and/or other problems and disadvantages and an aspect of the present general inventive concept provides a method for managing contents of a mobile device, a server, and a system such that, when a location of the mobile device enters a specific region, the mobile device transmits location information relating to the location of the mobile device and device information of the mobile device to the server and the server searches for and transmits content information corresponding to the location information to the mobile device.

### [Technical Solution]

According to an aspect of the present general inventive concept, a content managing method of a mobile device capable of communicating with a server includes displaying, in response to the mobile device entering a specific region that is defined by a user in the mobile device, a message indicating that the mobile device has entered into the specific region, transmitting , in response to a user input being received when the message is displayed, location information of the location of the mobile device and device information of the mobile device to the server, the server having content corresponding to the location information of the mobile device pre-stored therein; receiving the content corresponding to the location information from the server; and transmitting a command for printing the content to the server in response to receiving a user input for printing the content. The server, in response to receiving the location information of the mobile device and the device information of the mobile device, identifies the mobile device based on the device information of the mobile device, converts a first resolution of the content corresponding to the location information of the mobile device to a second resolution which is playable in the mobile device, and transmits the converted content. The server has a driver for executing a printing function on a printing device and prints the converted content through the printing device using the driver.

The content may be a document content.

The content managing method may further include transmitting the print command of the content to the printing device.

The content managing method may further include searching for a printing device corresponding to the location information of the mobile device. The transmitting operation of the print command of the content to the printer may transmit the print command to the searched printing device.

The location information may be detected by a Global Positioning System (GPS).

The content corresponding to the location information may be a content used at a location corresponding to the location information and be information relating to contents registered to the server.

According to an aspect of the present general inventive concept, a content managing method of a server capable of communicating with a mobile device includes receiving, in response to the mobile device entering a specific region that is defined by a user in the mobile device, location information of the location of the mobile device and device information of the mobile device from the mobile device, the server having content corresponding to the location information of the mobile device pre-stored therein; searching for the content corresponding to the received location information based on the device information; converting a first resolution of the searched content corresponding to the location information of the mobile device to a second resolution which is playable in the mobile device; transmitting the converted content to the mobile device; and receiving a command for printing the converted content from the mobile device in response to a user input for printing the converted content on the mobile device. The server has a driver for executing a printing function on a printing device and prints the converted content through the printing device using the driver.

The content may be a document content.

The content managing method may further include transmitting a print command of the content to the printing device.

The content managing method may further include searching for a printing device corresponding to the location information of the mobile device. The transmitting operation of the print command of the content to the printer may transmit the print command to the searched printing device.

The location information may be detected by a GPS.

The content corresponding to the location information may be a content used at a location corresponding to the location information and be information relating to contents registered to the server.

According to an aspect of the present general inventive concept, a content managing method of a content management system comprising a mobile device and a server capable of communicating with each other includes displaying, at the mobile device, in response to the mobile device entering a specific region that is defined by a user in the mobile device, a message indicating that the mobile device has entered into the specific region; transmitting, at the mobile device, in response to a user input being received when the message is displayed, location information of the location of the mobile device and device information of the mobile device to the server, the server having content corresponding to the location information of the mobile device pre-stored therein; searching for, at the server, the content corresponding to the location information based on the device information; transmitting, at the server, the content to the mobile device; and transmitting, at the mobile device, a command for printing the content to the server in response to receiving a user input for printing the content. The server, in response to receiving the location information of the mobile device and the device information of the mobile device, identifies the mobile device based on the device information of the mobile device, converts a first resolution of the content corresponding to the location information of the mobile device to a second resolution which is playable in the mobile device, and transmits the converted content. The server has a driver for executing a printing function on a printing device and prints the converted content through the printing device using the driver

### [Advantageous Effects]

According to various embodiments, the content managing method of the mobile device, the server, and the system is provided to, when the location of the mobile device enters the specific region, transmit the location information of the location of the mobile device and the device information of the mobile device from the mobile device to the server and to search for and transmit the content information corresponding to the location information from the server to the mobile device. Thus, the user can receive the content information by merely entering the specific location with the mobile device.

### [Description of Drawings]

FIG. 1 is a diagram of a content management system including a mobile device, a server, and a printer according to an embodiment of the present general inventive concept,
FIG. 2 is a block diagram of the mobile device and the server according to an embodiment of the present general inventive concept,
FIG. 3 is a flowchart of a content managing method when the server transmits a print command according to an embodiment of the present general inventive concept,
FIG. 4 is a flowchart of the content managing method when the mobile device transmits a print command according to an embodiment of the present general inventive concept,
FIGS. 5 through 9 are diagrams of a house related content information providing and printing process when the mobile device enters a region corresponding to the house according to an embodiment of the present general inventive concept,
FIG. 10 is a diagram of a meeting material content information providing and printing process when the mobile device enters a region corresponding to a conference room according to an embodiment of the present general inventive concept.

### [Best Mode for Invention]

The embodiment is described below in order to explain the present general inventive concept by referring to the drawings.

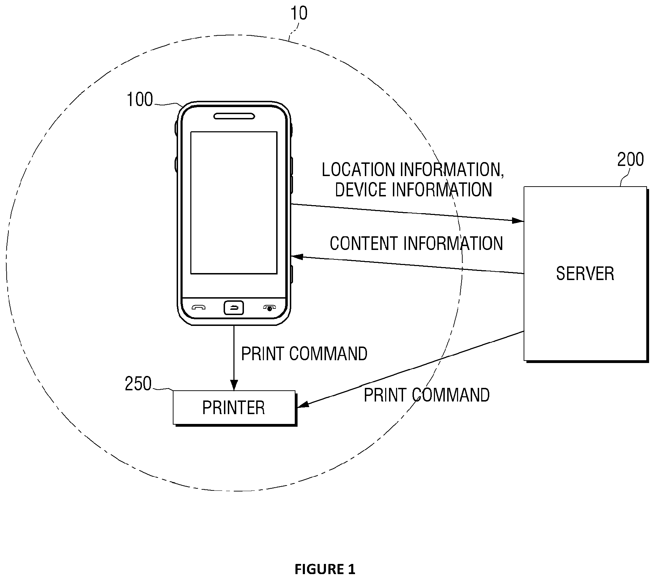

FIG. 1 is a diagram of a content management system including a mobile device 100, a server 200, and a printer 250 according to an embodiment of the present general inventive concept. When the mobile device 100 enters a specific region 10, the content management system of FIG. 1 provides a function allowing the mobile device 100 to download contents relating to the specific region 10 from the server 200 or allowing the printer 250 to print document contents relating to the specific region 10.

When the current location enters the specific region, the mobile device 100 transmits location information of the current location of the mobile device 100 and device information of the mobile device 100 to the server 200. That is, the mobile device 100 detects the current location and recognizes the specific region entrance of the current location as an event for transmitting the location information and the device information to the server 200. The mobile device 100 can detect the current location using a Global Positioning System (GPS). The mobile device 100 may detect the current location using a mobile communication base station or a wireless Access Point (AP).

Herein, the specific region is a regional area preset by a user in the mobile device 100. The specific region can be set using at least one of GPS coordinate information, mobile communication base station location information, and wireless AP location information. For example, when a specific region is set for the house, the mobile device 100 can set a 5 -meter radius of the house as the specific region using the GPS coordinate information.

The location information of the mobile device 100 is information indicating the current location of the mobile device 100. The location information of the mobile device 100 can be the GPS coordinate information or the location information of the mobile communication base station or the wireless AP currently connected with the mobile device 100. In detail, when the mobile device 100 is in a GPS signal reception area (for example, the outdoors), the mobile device 100 detects the location information using the GPS. Yet, when the mobile device 100 is in a GPS non-reception area (for example, inside the building), the mobile device detects the location information of the mobile device 100 using the location information of the mobile communication base station or the wireless AP.

The device information of the mobile device 100 is information for specifying the mobile device 100, and includes device information and user information of the mobile device 100. In detail, the device information of the mobile device 100 includes at least one of a model name, a manufacturer, serial numbers, and a user ID.

The mobile device 100 receives content information corresponding to the location information from the server 200. Herein, the content information corresponding to the location information indicates information of contents relating to the current specific region. The content information may be a list of the contents relating to the specific region, or the contents. For example, when the specific region is the house, the content information can be homework information and preparation information. When the specific region is a conference room, the content information can be meeting material information. The content information can be set by the user to correspond to the location information, or may be mapped to the location information in advance by a content creator. For example, the content creator can generate and upload contents to the server 200 after presetting the download location information in the contents.

The mobile device 100 transmits command information input by the user to the server 200. Herein, the command information indicates a command for processing the content information received from the server 200.

For example, the command information can include a print command for the content corresponding to the received content information. That is, the command information may be the print command to print the content corresponding to the content information. In this case, the content is a document content. The mobile device 100 sends the print command of the document content to the server 200.

The command information may be a download command for the content corresponding to the received content information. When the mobile device 100 sends the content download command to the server 200, the mobile device 100 downloads the corresponding content from the server.

Meanwhile, the mobile device 100 may directly send the print command of the content corresponding to the received content information, to the printer 250. In so doing, the mobile device 100 first searches for the closest printer in the specific region. Next, the mobile device 100 sends the print command to the searched printer 250. The printer 250 prints the content.

The server 200 functions to provide the content to the mobile device 100. In detail, when the location of the mobile device 100 enters the specific region, the server 200 receives the location information relating to the location of the mobile device 100 and the device information of the mobile device 100 from the mobile device 100.

Using the received device information, the server 200 can identify the mobile device 100 currently entering the specific region. The server 200 searches for the content information corresponding to the received location information. Next, the server 200 transmits the searched content information to the mobile device 100.

For doing so, the server 200 stores device information of various devices. Accordingly, the server 200 matches the device information of the mobile device 100 to one of the stored device information and recognizes the mobile device 100 using the matching device information. The server 200 stores various location information and their corresponding contents. When receiving the location information from the mobile device 100, the server 200 searches for the content corresponding to the location information and transmits information of the searched content to the mobile device 100.

The server 200 receives the command information input by the user from the mobile device 100. When the command information is the print command, the server 200 searches for the printer corresponding to the location information of the mobile device 100. That is, the server 200 searches for the printer closest to the mobile device 100. At this time, the server 200 searches for the printer closest to the mobile device 100 by comparing location information of printers pre-registered and the received location information of the mobile device 100. Next, the server 200 sends the print command to the searched printer 250. The printer 250 prints the content corresponding to the content information.

In so doing, a driver of the printer 250 is required to print the content. Hence, the driver of the printer 250 may be installed to the server 200. When the driver of the printer 250 is not installed to the server 200, the server 200 may transmit the print command and the content to a certain device (for example, a PC or a notebook) of the installed driver of the printer 250. The certain device prints the content using the printer 250.

When the command information is the content download command, the server 200 transmits the content corresponding to the download command to the mobile device 100. In so doing, based on the received device information of the mobile device 100, the server 200 may change the content into the playable form of the mobile device 100 and transmit the content. For example, when a resolution of the content is 1920^{∗}1080 and a resolution of the mobile device 100 is 480^{∗}240, the server 200 converts the resolution of the content to 480^{∗}240 based on the device information of the mobile device 100 and transmits the converted content to the mobile device 100.

The printer 250 prints the content (for example, document content) according to the received print command. The printer 250 is a network printer which can communicate over the network.

As such, using the content management system according to the embodiment, the user can confirm the content information corresponding to the current location through the mobile device 100 and automatically print the content relating to the current location by merely putting the mobile device 10 into the specific region 10.

Meanwhile, when the user's particular manipulation is input after detecting the current location entering the specific region, the mobile device 100 may transmit the location information of the current location and the device information to the server 200. That is, when the current location is inside the specific region and the user's particular manipulation is input, the mobile device 100 transmits the location information and the device information to the server 200.

For example, when the mobile device 100 enters the specific region, the mobile device 100 displays a message informing of the specific region entrance on a screen. Next, when the user presses a particular button of the mobile device 100, the mobile device 100 may transmit the location information and the device information to the server 200. The mobile device 100 receives the content information relating to the current location from the server. It is noted that the particular manipulation can shake the mobile device 100 or take a picture, besides the press of the particular button.

For example, when the user presses a particular button of the mobile device 100 around a movie theatre, the mobile device 100 may download movie discount coupon information from the server 200. When the user presses a particular button of the mobile device 100 at home, the mobile device 100 may download the homework of the day from the server 200 and print the homework using the network printer at home. When the user shakes the mobile device 100 at a subway station, the mobile device 100 may download subway station information (for example, last train time, exit information, etc.) from the server 200 and display it on the screen.

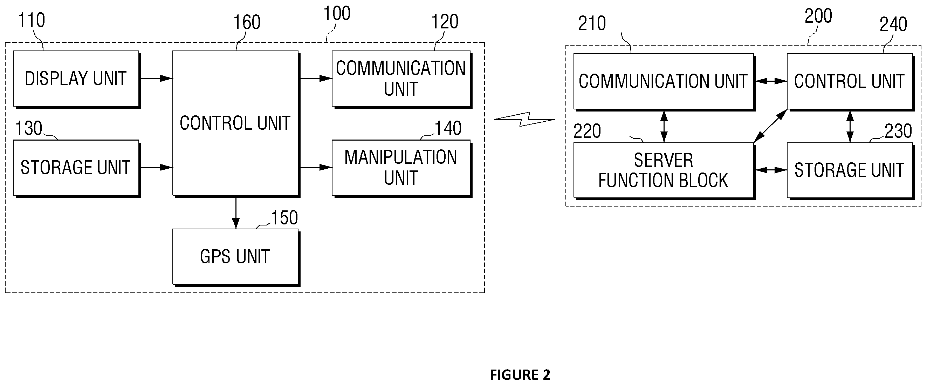

Hereafter, structures of the mobile device 100 and the server 200 are explained by referring to FIG. 2. FIG. 2 is a block diagram of the mobile device 100 and the server 200 according to an embodiment of the present general inventive concept.

As shown in FIG. 2, the mobile device 100 includes a display unit 110, a communication unit 120, a storage unit 130, a manipulation unit 140, a GPS unit 150, and a control unit 160.

The display unit 110 displays an image for providing the functions of the mobile device 100. The display unit 110 displays Graphic User Interfaces (GUIs) for the user's manipulation on the screen. The display unit 110 may display the received content information on the screen.

The communication unit 120 is connected to access the server 200 over a mobile communication network or Internet. Herein, the mobile communication network can be a Group Special Mobile (GSM) communication network or a Wideband Code Division Multiple Access (WCDMA) communication network. The communication unit 120 is connected to the mobile communication network 120 via the mobile communication base station. The communication unit 120 is connected to the Internet via the wireless AP.

The communication unit 120 transmits and receives various information to and from the server 200. In detail, when the current location enters the specific region, the communication unit 120 transmits the location information of the current location of the mobile device 100 and the device information of the mobile device 100 to the server 200.

The communication unit 120 transmits the command information input by the user to the server 200. Herein, the command information indicates the command for processing the content information received from the server 200.

The storage unit 130 stores programs for executing the various functions of the mobile device 100. The storage unit 130 stores the downloaded content information. As such, the storage unit 130 can be implemented using a hard disc, a non-volatile memory, and so on.

The manipulation unit 140 receives and sends the user's manipulation to the controller 160. In detail, the manipulation unit 140 receives a content selection command and the print command using the content information from the user. The manipulation unit 140 can be a button disposed on the mobile device 100 or a touch screen.

The GPS unit 150 detects the current location information of the mobile device 100. The GPS unit 150 detects the location information in the form of GPS coordinate information including latitude and longitude information. The GPS unit 150 sends the detected location information to the control unit 150.

The control unit 160 controls the operations of the mobile device 100. In detail, the control unit 160 detects whether the mobile device 100 enters the specific region using the location information detected through the GPS unit 150. When detecting that the current location of the mobile device 100 enters the specific region, the control unit 160 controls to transmit the location information of the current location of the mobile device 100 and the device information of the mobile device 100 to the server 200.

That is, the control unit 160 detects the current location and recognizes the specific region entrance of the current location as the event for transmitting the location information and the device information to the server 200. The control unit 160 can detect the current location through the GPS unit 150. The control unit 160 may detect the current location using the mobile communication base station or the wireless AP connected through the communication unit 120. For doing so, the control unit 160 periodically detects the current location. For example, the control unit 160 may control to operate the GPS unit 150 once every five minutes to detect the coordinates of the current location.

In detail, when the mobile device 100 is in the GPS signal reception area (for example, the outdoors), the control unit 160 detects the location information using the GPS unit 150. Yet, when the mobile device 100 is in the GPS non-reception area (for example, inside the building), the control unit 160 detects the location information of the mobile device 100 using the location information of the mobile communication base station or the wireless AP connected through the communication unit 120.

The control unit 160 controls to transmit the command information input by the user to the server 200. Herein, the command information indicates the command for processing the content information received from the server 200.

For example, the command information can include the print command for the content corresponding to the received content information. That is, the command information maybe the print command to print the content corresponding to the content information. In this case, the content is the document content. The control unit 160 controls to send the print command of the document content to the server 200.

Meanwhile, the control unit 160 may control to directly send the print command of the content corresponding to the received content information, to the printer 250. In so doing, the control unit 160 searches for the closest printer in the specific region. Next, the control unit 160 controls to send the print command to the searched printer 250. The printer 250 prints the content.

When the user's particular manipulation is input after the current location entrance of the mobile device 100 into the specific region is detected, the control unit 160 may control to transmit the location information of the current location of the mobile device 100 and the device information of the mobile device 100 to the server 200. That is, when the current location is inside the specific region and the user's particular manipulation is input, the control unit 160 may control to transmit the location information and the device information to the server 200. For example, when the mobile device 100 enters the specific region, the control unit 160 displays the message informing of the specific region entrance on the screen. When the user presses a particular button of the mobile device 100, the control unit 160 may control to transmit the location information and the device information to the server 200. It is noted that the particular manipulation can shake the mobile device 100 or take a picture, besides the press of the particular button.

The control unit 160 can pass through an authentication process by transmitting the device information to the server 200. That is, using the device information, the server 200 may authenticate the content download right of the control unit 160.

As shown in FIG. 2, the server 200 includes a communication unit 210, a server function block 220, a storage unit 230, and a control unit 240.

The communication unit 210 is connected to access the mobile device 100 over the Internet. The communication unit 210 can be realized using a network interface such as wired LAN or wireless LAN.

The server function block 220 performs proper functions of the server 200. For example, the server function block 220 executes an operating system so that the server 200 functions as the server, and executes various programs.

The storage unit 230 stores contents corresponding to various specific regions. Herein, the contents can include video contents, photo contents, music contents, and document contents. For example, when the specific region is the house, the contents can be contents relating to the homework or the preparation. When the specific region is the conference room, the content information can be meeting materials. The storage unit 230 stores device information of various devices to recognize the mobile device 100.

The control unit 240 controls the operations of the server 200. The control unit 240 controls to provide the contents to the mobile device 100. In detail, when the location of the mobile device 100 enters the specific region, the control unit 240 receives the location information of the location of the mobile device 100 and the device information of the mobile device 100 from the mobile device 100. Next, the control unit 240 searches for the content information corresponding to the received location information. The control unit 240 controls to transmit the searched content information to the mobile device 100.

The control unit 240 receives the command information input by the user from the mobile device 100. When the command information is the print command, the control unit 240 searches for the printer corresponding to the location information of the mobile device 100. That is, the control unit 240 searches for the printer closest to the mobile device 100. At this time, the control unit 240 searches for the printer closest to the mobile device 100 by comparing the location information of the pre-registered printers and the received location information of the mobile device 100. Next, the control unit 240 controls to send the print command to the searched printer 250. The printer 250 prints the content corresponding to the content information.

As such, using the mobile device 100 and the server 200 according to according to the embodiment, the user can confirm the content information corresponding to the current location through the mobile device 100 and automatically print the content relating to the current location by merely carrying the mobile device 10 into the specific region 10.

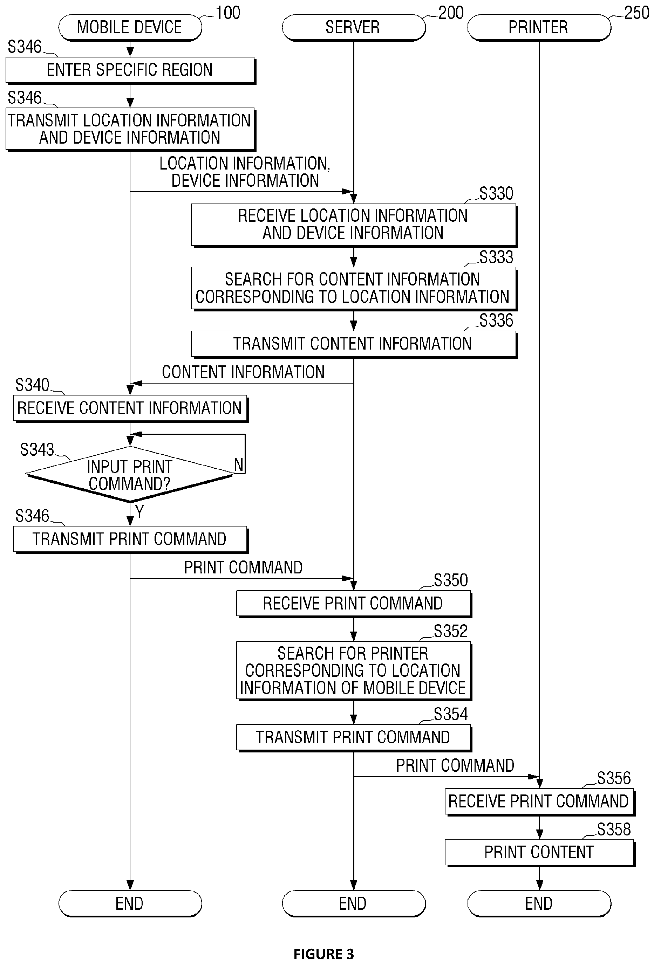

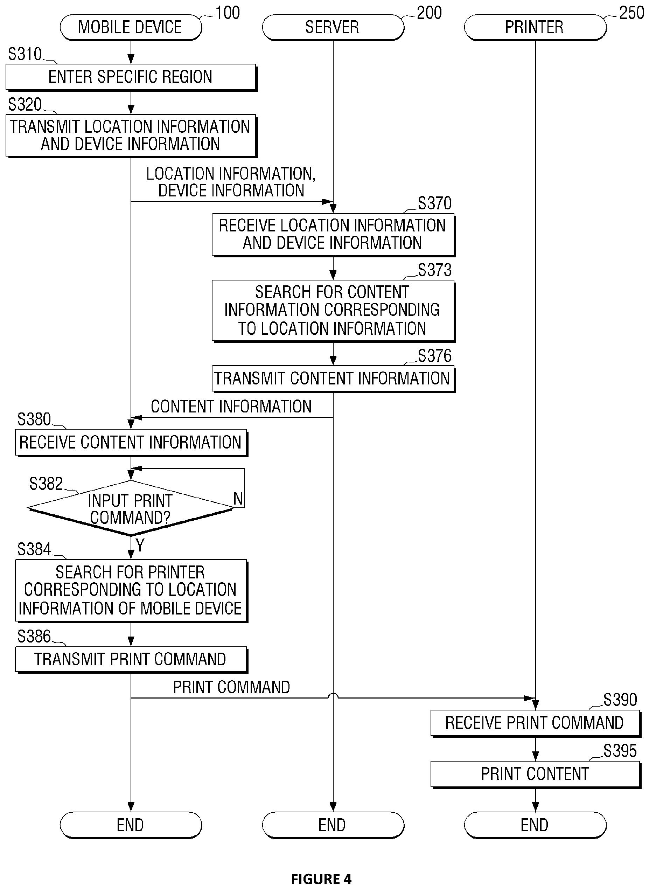

Hereafter, a content managing method is explained by referring to FIGS. 3 and 4. FIG. 3 is a flowchart of a content managing method when the server 200 transmits the print command according to an embodiment of the present general inventive concept.

The mobile device 100 detects whether the current location enters the specific region (S310). When the current location enters the specific region, the mobile device 100 transmits the location information of the current location of the mobile device 100 and the device information of the mobile device 100 to the server 200 (S320). That is, the mobile device 100 recognizes the specific region entrance of the current location as the event for transmitting the location information and the device information to the server 200. The mobile device 100 can detect the current location through the GPS. The mobile device 100 may detect the current location using the mobile communication base station or the wireless AP. More specifically, when the mobile device 100 is in the GPS signal reception area (for example, the outdoors), the mobile device 100 detects the location information using the GPS. Yet, when the mobile device 100 is in the GPS non-reception area (for example, inside the building), the mobile device 100 detects the location information of the mobile device 100 using the location information of the mobile communication base station or the wireless AP.

The server 200 receives the location information of the location of the mobile device 100 and the device information of the mobile device 100 from the mobile device 100 (S330). Next, the server 200 searches for the content information corresponding to the received location information (S333). Next, the server 200 transmits the searched content information to the mobile device 100 (S336).

The mobile device 100 receives the content information corresponding to the location information from the server 200 (S340). Herein, the content information corresponding to the location information indicates the information of the contents relating to the current specific region. The content information may be the list of the contents relating to the specific region, or the contents. For example, when the specific region is the house, the content information can be the homework information and the preparation information. When the specific region is the conference room, the content information can be the meeting material information.

When the user inputs the print command (S343-Y), the mobile device 100 sends the input command information to the server 200 (S346). At this time, the content is the document content.

The server 200 receives the print command input by the user from the mobile device 100 (S350). The server 200 searches for the printer corresponding to the location information of the mobile device 100 (S352). That is, the server 200 searches for the printer closest to the mobile device 100. At this time, the server 200 searches for the printer closest to the mobile device 100 by comparing the location information of the pre-registered printers and the received location information of the mobile device 100.

Next, the server 200 sends the print command to the searched printer 250 (S354). The printer 250 receives the print command (S356) and prints the content corresponding to the content information (S358).

Thus, when the mobile device 100 enters the specific region, the server 200 prints the content relating to the specific region at the printer 250.

Meanwhile, when the mobile device 100 can communicate with the printer 250, the mobile device 100 may directly send the print command of the content corresponding to the received content information, to the printer 250, which shall be described by referring to FIG. 4. FIG. 4 is a flowchart of the content managing method when the mobile device 100 transmits the print command according to an embodiment of the present general inventive concept.

The mobile device 100 detects whether the current location enters the specific region (S360). When the current location enters the specific region, the mobile device 100 transmits the location information of the current location of the mobile device 100 and the device information of the mobile device 100 to the server 200 (S363). That is, the mobile device 100 recognizes the specific region entrance of the current location as the event for transmitting the location information and the device information to the server 200. The mobile device 100 can detect the current location using the GPS. The mobile device 100 may detect the current location using the mobile communication base station or the wireless AP. More specifically, when the mobile device 100 is in the GPS signal reception area (for example, the outdoors), the mobile device 100 detects the location information using the GPS. Yet, when the mobile device 100 is in the GPS non-reception area (for example, inside the building), the mobile device detects the location information of the mobile device 100 using the location information of the mobile communication base station or the wireless AP.

The server 200 receives the location information of the location of the mobile device 100 and the device information of the mobile device 100 from the mobile device 100 (S370). Next, the server 200 searches for the content information corresponding to the received location information (S373). Next, the server 200 transmits the searched content information to the mobile device 100 (S376).

The mobile device 100 receives the content information corresponding to the location information from the server 200 (S380). Herein, the content information relating to the location information indicates the information of the contents relating to the current specific region. The content information may be the list of the contents relating to the specific region, or the contents. For example, when the specific region is the house, the content information can be the homework information and the preparation information. When the specific region is the conference room, the content information can be the meeting material information.

When the user inputs the print command (S382-Y), the mobile device 100 searches for the printer corresponding to the current location information (S384). That is, the mobile device 100 searches for the closest printer. At this time, the mobile device 100 searches for the closest printer by comparing the location information of the pre-registered printers and the detected current location information.

The mobile device 100 sends the print command to the searched printer 250 (S386). The printer 250 receives the print command (S390) and recognizes the content corresponding to the content information (S395).

As such, when the mobile device 100 enters the specific region, the mobile device 100 prints the content relating to the specific region using the printer 250.

According to the content managing method according to the embodiment, the user can confirm the content information corresponding to the current location through the mobile device 100 and automatically print the content relating to the current location by merely carrying the mobile device 10 into the specific region 10.

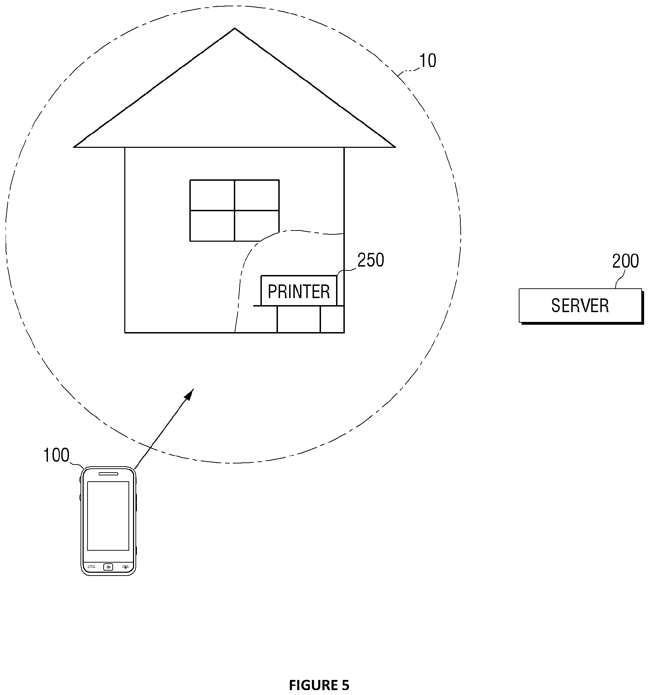

FIGS. 5 through 9 are diagrams of a house related content information providing and printing process when the mobile device 100 enters a region corresponding to the house according to an embodiment of the present general inventive concept.

FIG. 5 depicts the specific region 10 which is set to a circular region of a certain radius based on the house. That is, the specific region 10 is set to the house region. In this case, the mobile device 100 sets the specific region 10 using the GPS coordinate information around the house, or sets the specific region 10 using the location information of the mobile communication base station or the wireless AP installed near the house. The printer 250 is disposed inside the house and the server 200 is disposed outside.

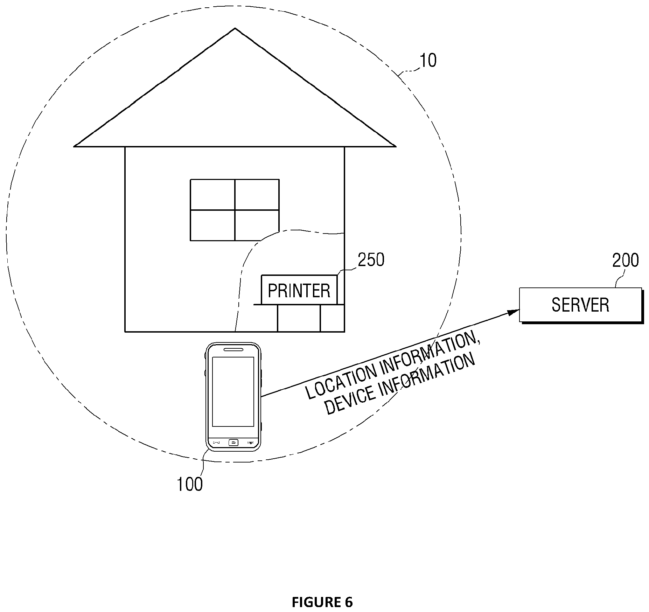

In FIG. 5, the mobile device 100 does not enter the specific region 10 yet. At this time, when the user puts the mobile device 100 into the specific region 10, the mobile device 100 transmits the location information and the device information to the server 200 as shown in FIG. 6.

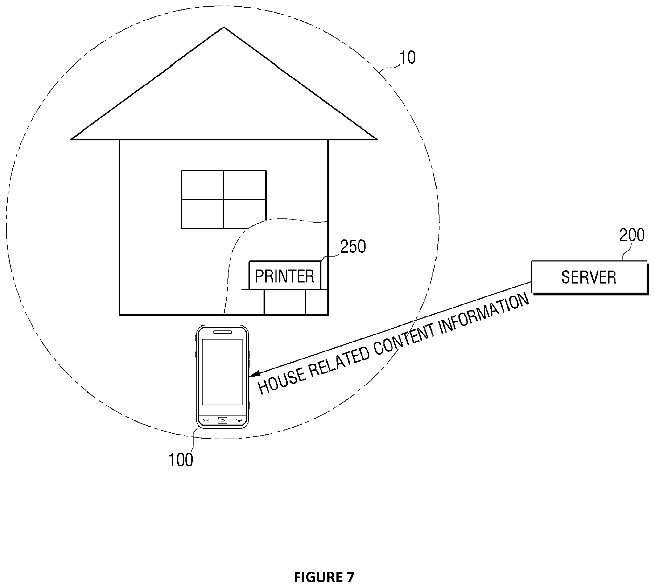

In response, the server 200 transmits content information relating to the house to the mobile device 100 as shown in FIG. 7. For example, the content information relating to the house can be the homework information, the preparation information, and the like.

As such, when the mobile device 100 receives the content information from the server 200, the user can confirm the contents relating to the house (for example, homework and preparation) through the screen of the mobile device 100. The user can input the print command for the house related contents through the mobile device 100. When the user inputs the print command, the mobile device 100 processes to print the house related contents.

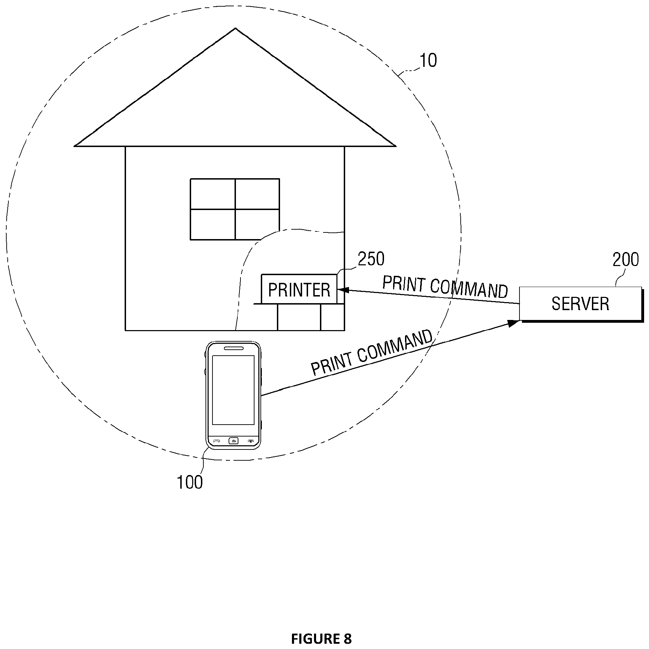

When the mobile device 100 cannot communicate with the printer 250 as shown in FIG. 8, the mobile device 100 sends the print command to the server 200 and the server 200 sends the print command to the printer 250.

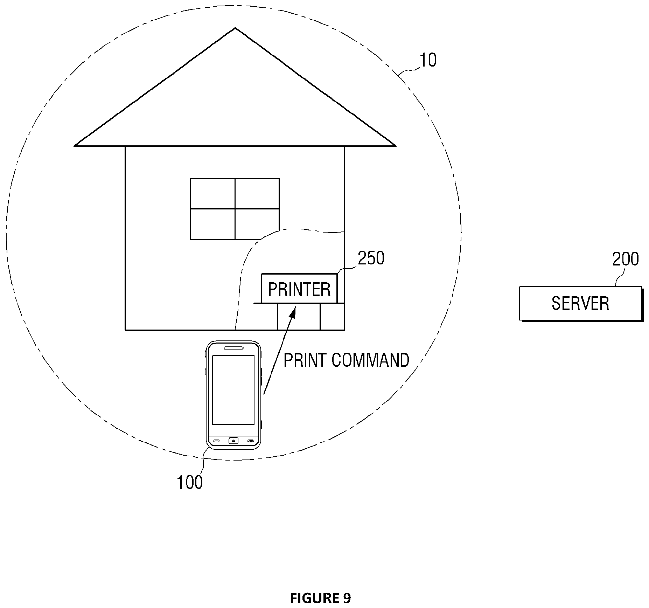

When the mobile device 100 can communicate with the printer 250 as shown in FIG. 9, the mobile device 100 sends the print command directly to the printer 250.

As such, as entering the house region, the mobile device 100 receives the house related contents from the server 200 and prints through the printer 250.

Thus, the user can check the homework and the preparation material which are the house related contents, through the mobile device 100 by merely carrying the mobile device 100 near the house. Also, since the user can use the mobile device 100 to print the homework and the preparation material using the printer 250 at home, the user can obtain the homework and the preparation material printed from the printer 250 at home by merely carrying the mobile device 100 to home.

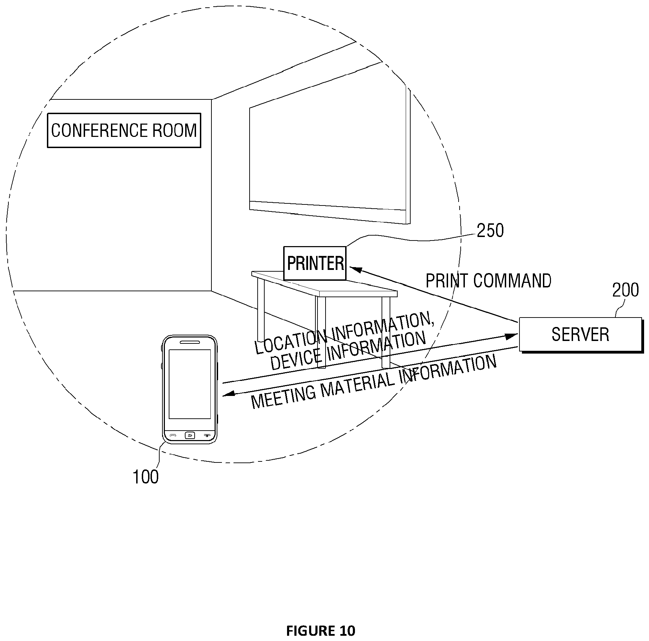

Hereafter, the case when the specific region is set to the conference room is explained by referring to FIG. 10. FIG. 10 is a diagram of a meeting material content information providing and printing process when the mobile device 100 enters a region corresponding to the conference room according to an embodiment of the present general inventive concept.

When the mobile device 100 enters the specific region 10 corresponding to the conference room as shown in FIG. 10, the mobile device 100 transmits the location information and the device information to the server 200.

In response, the server 200 transmits meeting material information corresponding to the content information to the mobile device 100. For example, the meeting material information can be a meeting plan, a meeting related document, and so on.

As such, when the mobile device 100 receives the content information from the server 200, the user can check the meeting material information (for example, the meeting plan and the meeting related document) through the screen of the mobile device 100. Next, the user can input the print command for the conference materials through the mobile device 100. When the print is input by the user, the mobile device 100 processes to print the meeting materials.

In FIG. 10, the mobile device 100 cannot communicate with the printer 250. Thus, the mobile device 100 sends the print command to the server 200 and the server 200 sends the print command to the printer 250.

However, when the mobile device 100 can communicate with the printer 250, the mobile device 100 may send the print command directly to the printer 250.

As such, by entering the conference room region, the mobile device 100 receives the meeting related contents from the server 200 and prints them using the printer 250.

Thus, the user can check the meeting plan and the meeting related material which are the meeting related contents, through the mobile device 100 by merely carrying the mobile device 100 near the conference room. Since the user can use the mobile device 100 to print the meeting plan and the meeting related material using the printer 250 in the conference room in advance, the user can obtain the meeting plan and the meeting related material printed by the printer 250 in the conference room by merely carrying the mobile device 100 near the conference room.

As stated above, by merely putting the mobile device 100 into the specific region, the user can receive the contents suitable for the location from the server 200, check the contents through the mobile device 100, and print the contents using the printer 250.

Meanwhile, in the exemplary embodiment, the mobile device 100 can employ any device capable of detecting the current location and downloading the contents. For example, the mobile device 100 can be a mobile phone, a TV, an MP3, a PMP, a notebook, and a computer which can transmit and receive data.

Meanwhile, in the exemplary embodiment, the server 200 can employ any server capable of transmitting the content to the mobile device 100.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. A content managing method of a mobile device (100) capable of communicating with a server (200), comprising:
displaying, in response to the mobile device entering a specific region (10) that is defined by a user in the mobile device, a message indicating that the mobile device has entered into the specific region;
transmitting, in response to a user input being received when the message is displayed, location information of the location of the mobile device and device information of the mobile device to the server, the server having content corresponding to the location information of the mobile device pre-stored therein;
receiving the content corresponding to the location information from the server; and
transmitting a command for printing the content to the server in response to receiving a user input for printing the content,
wherein the server, in response to receiving the location information of the mobile device and the device information of the mobile device, identifies the mobile device based on the device information of the mobile device, converts a first resolution of the content corresponding to the location information of the mobile device to a second resolution which is playable in the mobile device, and transmits the converted content, and
wherein the server has a driver for executing a printing function on a printing device (250) and prints the converted content through the printing device using the driver.

2. The content managing method of the mobile device (100) of claim 1, wherein the content is a document content.

3. The content managing method of the mobile device (100) of claim 1, further comprising:
transmitting the print command of the content to the printing device (250).

4. The content managing method of the mobile device (100) of claim 3, further comprising:
searching for a printing device (250) corresponding to the location information of the mobile device,
wherein the transmitting operation of the print command of the content to the printing device transmits the print command to the searched printing device.

5. The content managing method of the mobile device (100) of claim 1, wherein the location information is detected by a Global Positioning System (GPS).

6. The content managing method of the mobile device (100) of claim 1, wherein the content corresponding to the location information is a content used at a location corresponding to the location information and is information relating to contents registered to the server (200).

7. A content managing method of a server (200) capable of communicating with a mobile device (100), comprising:
receiving, in response to the mobile device entering a specific region (10) that is defined by a user in the mobile device, location information of the location of the mobile device and device information of the mobile device from the mobile device, the server having content corresponding to the location information of the mobile device pre-stored therein;
searching for the content corresponding to the received location information based on the device information;
converting a first resolution of the searched content corresponding to the location information of the mobile device to a second resolution which is playable in the mobile device;
transmitting the converted content to the mobile device; and
receiving a command for printing the converted content from the mobile device in response to a user input for printing the converted content on the mobile device,
wherein the server has a driver for executing a printing function on a printing device (250) and prints the converted content through the printing device using the driver.

8. The content managing method of the server (200) of claim 7, wherein the content is a document content.

9. The content managing method of the server (200) of claim 7, further comprising:
transmitting a print command of the content to the printing device (250).

10. The content managing method of the server (200) of claim 9, further comprising:
searching for a printing device (250) corresponding to the location information of the mobile device (100),
wherein the transmitting operation of the print command of the content to the printing device transmits the print command to the searched printing device.

11. A content managing method of a content management system comprising a mobile device (100) and a server (200) capable of communicating with each other, comprising:
displaying, at the mobile device, in response to the mobile device entering a specific region (10) that is defined by a user in the mobile device, a message indicating that the mobile device has entered into the specific region;
transmitting, at the mobile device, in response to a user input being received when the message is displayed, location information of the location of the mobile device and device information of the mobile device to the server, the server having content corresponding to the location information of the mobile device pre-stored therein;
searching for, at the server, the content corresponding to the location information based on the device information;
transmitting, at the server, the content to the mobile device; and
transmitting, at the mobile device, a command for printing the content to the server in response to receiving a user input for printing the content,
wherein the server, in response to receiving the location information of the mobile device and the device information of the mobile device, identifies the mobile device based on the device information of the mobile device, converts a first resolution of the content corresponding to the location information of the mobile device to a second resolution which is playable in the mobile device, and transmits the converted content, and
wherein the server has a driver for executing a printing function on a printing device (250) and prints the converted content through the printing device using the driver.

## Patentansprüche

1. Inhaltsverwaltungsverfahren einer mobilen Vorrichtung (100), die fähig ist, mit einem Server (200) zu kommunizieren, Folgendes umfassend:
Anzeigen einer Nachricht, die angibt, dass die mobile Vorrichtung in die bestimmte Region eingetreten ist, als Reaktion darauf, dass die mobile Vorrichtung in eine bestimmte Region (10) eintritt, die von einem Benutzer in der mobilen Vorrichtung definiert wurde;
Übertragen von Standortinformationen des Standorts der mobilen Vorrichtung und von Vorrichtungsinformationen der mobilen Vorrichtung an den Server als Reaktion auf das Empfangen einer Benutzereingabe, wenn die Nachricht angezeigt wird, wobei der Server Inhalt aufweist, der den Standortinformationen der mobilen Vorrichtung entspricht, die darauf vorgespeichert waren;
Empfangen des Inhalts, der den Standortinformationen vom Server entspricht; und
Übertragen eines Befehls zum Drucken des Inhalts an den Server als Reaktion auf den Empfang einer Benutzereingabe zum Drucken des Inhalts,
wobei der Server in Reaktion auf das Empfangen der Standortinformationen der mobilen Vorrichtung und der Vorrichtungsinformationen der mobilen Vorrichtung die mobile Vorrichtung basierend auf den Vorrichtungsinformationen der mobilen Vorrichtung identifiziert, eine erste Auflösung des Inhalts entsprechend den Standortinformationen der mobilen Vorrichtung in eine zweite Auflösung konvertiert, welche auf der mobilen Vorrichtung abspielbar ist und den konvertierten Inhalt überträgt, und
wobei der Server einen Treiber zum Ausführen einer Druckfunktion auf einer Druckvorrichtung (250) aufweist und den konvertierten Inhalt unter Verwendung des Treibers durch die Druckvorrichtung druckt.

2. Inhaltsverwaltungsverfahren der mobilen Vorrichtung (100) nach Anspruch 1, wobei der Inhalt ein Dokumentinhalt ist.

3. Inhaltsverwaltungsverfahren der mobilen Vorrichtung (100) nach Anspruch 1, ferner Folgendes umfassend:
Übertragen des Druckbefehls des Inhalts an die Druckvorrichtung (250).

4. Inhaltsverwaltungsverfahren der mobilen Vorrichtung (100) nach Anspruch 3, ferner Folgendes umfassend:
Suchen nach einer Druckvorrichtung (250), die den Standortinformationen der mobilen Vorrichtung entspricht,
wobei der Übertragungsvorgang des Druckbefehls des Inhalts an die Druckvorrichtung den Druckbefehl an die gesuchte Druckvorrichtung überträgt.

5. Inhaltsverwaltungsverfahren der mobilen Vorrichtung (100) nach Anspruch 1, wobei die Standortinformationen von einem Global Positioning System (GPS) erfasst werden.

6. Inhaltsverwaltungsverfahren der mobilen Vorrichtung (100) nach Anspruch 1, wobei der Inhalt, der den Standortinformationen entspricht, ein Inhalt ist, der an einem Standort verwendet wird, der den Standortinformationen entspricht, und Informationen in Bezug auf Inhalte sind, die auf dem Server (200) registriert sind.

7. Inhaltsverwaltungsverfahren eines Servers (200), der fähig ist, mit einer mobilen Vorrichtung (100) zu kommunizieren, Folgendes umfassend:
Empfangen von Standortinformationen des Standorts der mobilen Vorrichtung und von Vorrichtungsinformationen der mobilen Vorrichtung von der mobilen Vorrichtung als Reaktion auf das Eintreten der mobilen Vorrichtung in eine bestimmte Region (10), die durch einen Benutzer in der mobilen Vorrichtung definiert ist, wobei der Server Inhalt aufweist, der den Standortinformationen der mobilen Vorrichtung entspricht, die darauf vorgespeichert sind;
Suchen des Inhalts, der den empfangenen Standortinformationen basierend auf den Vorrichtungsinformationen entspricht;
Konvertieren einer ersten Auflösung des gesuchten Inhalts entsprechend den Standortinformationen der mobilen Vorrichtung in eine zweite Auflösung, welche auf der mobilen Vorrichtung abspielbar ist;
Übertragen des konvertierten Inhalts an die mobile Vorrichtung; und
Empfangen eines Befehls zum Drucken des konvertierten Inhalts von der mobilen Vorrichtung als Reaktion auf eine Benutzereingabe zum Drucken des konvertierten Inhalts auf der mobilen Vorrichtung,
wobei der Server einen Treiber zum Ausführen einer Druckfunktion auf einer Druckvorrichtung (250) aufweist und den konvertierten Inhalt unter Verwendung des Treibers durch die Druckvorrichtung druckt.

8. Inhaltsverwaltungsverfahren des Servers (200) nach Anspruch 7, wobei der Inhalt ein Dokumentinhalt ist.

9. Inhaltsverwaltungsverfahren des Servers (200) nach Anspruch 7, ferner Folgendes umfassend: Übertragen eines Druckbefehls des Inhalts an die Druckvorrichtung (250).

10. Inhaltsverwaltungsverfahren des Servers (200) nach Anspruch 9, ferner Folgendes umfassend: Suchen nach einer Druckvorrichtung (250), die den Standortinformationen der mobilen Vorrichtung (100) entspricht,
wobei der Übertragungsvorgang des Druckbefehls des Inhalts an die Druckvorrichtung den Druckbefehl an die gesuchte Druckvorrichtung überträgt.

11. Inhaltsverwaltungsverfahren eines Inhaltsverwaltungssystems, umfassend eine mobile Vorrichtung (100) und einen Server (200), die fähig sind, miteinander zu kommunizieren, Folgendes umfassend:
Anzeigen einer Nachricht auf der mobilen Vorrichtung, die angibt, dass die mobile Vorrichtung in die bestimmte Region eingetreten ist, als Reaktion darauf, dass die mobile Vorrichtung in eine bestimmte Region (10) eintritt, die von einem Benutzer in der mobilen Vorrichtung definiert wurde;
Übertragen auf der mobilen Vorrichtung von Standortinformationen des Standorts der mobilen Vorrichtung und von Vorrichtungsinformationen der mobilen Vorrichtung an den Server als Reaktion auf das Empfangen einer Benutzereingabe, wenn die Nachricht angezeigt wird, wobei der Server Inhalt aufweist, der den Standortinformationen der mobilen Vorrichtung entspricht, die darauf vorgespeichert sind;
Suchen des Inhalts auf dem Server basierend auf den Vorrichtungsinformationen, der den Standortinformationen entspricht;
Übertragen des Inhalts auf dem Server an die mobile Vorrichtung; und Übertragen eines Befehls zum Drucken des Inhalts auf der mobilen Vorrichtung an den Server als Reaktion auf den Empfang einer Benutzereingabe zum Drucken des Inhalts,
wobei der Server in Reaktion auf das Empfangen der Standortinformationen der mobilen Vorrichtung und der Vorrichtungsinformationen der mobilen Vorrichtung die mobile Vorrichtung basierend auf den Vorrichtungsinformationen der mobilen Vorrichtung identifiziert, eine erste Auflösung des Inhalts entsprechend den Standortinformationen der mobilen Vorrichtung in eine zweite Auflösung konvertiert, welche auf der mobilen Vorrichtung abspielbar ist und den konvertierten Inhalt überträgt, und
wobei der Server einen Treiber zum Ausführen einer Druckfunktion auf einer Druckvorrichtung (250) aufweist und den konvertierten Inhalt unter Verwendung des Treibers durch die Druckvorrichtung druckt.

## Revendications

1. Méthode de gestion du contenu d'un appareil mobile (100) capable de communiquer avec un serveur (200), comprenant
l'affichage, en réponse à l'entrée de l'appareil mobile dans une région spécifique (10) définie par un utilisateur dans l'appareil mobile, d'un message indiquant que l'appareil mobile est entré dans la région spécifique ;
la transmission, en réponse à la réception d'une entrée de l'utilisateur lors de l'affichage du message, d'informations de localisation de l'appareil mobile, et d'informations de dispositif de l'appareil mobile au serveur, le serveur possédant un contenu correspondant aux informations de localisation de l'appareil mobile mémorisées préalablement dans celui-ci ;
la réception du serveur du contenu correspondant aux informations de localisation provenant ; et
la transmission d'une commande pour l'impression du contenu au serveur en réponse à la réception d'une entrée de l'utilisateur pour l'impression du contenu,
le serveur identifiant, en réponse à la réception des informations de localisation de l'appareil mobile et des informations de dispositif de l'appareil mobile, l'appareil mobile sur la base des informations de dispositif de l'appareil mobile, convertissant une première résolution du contenu correspondant aux informations de localisation de l'appareil mobile en une deuxième résolution lisible dans l'appareil mobile, et transmettant le document converti, et
le serveur possédant un pilote pour l'exécution d'une fonction d'impression sur un dispositif d'impression (250), et imprimant le contenu converti à travers le dispositif d'impression en utilisant le pilote.

2. Méthode de gestion du contenu de l'appareil mobile (100) selon la revendication 1, le contenu étant un contenu de document.

3. Méthode de gestion du contenu de l'appareil mobile (100) selon la revendication 1 comprenant en outre la transmission de la commande d'impression du contenu au dispositif d'impression (250).

4. Méthode de gestion du contenu de l'appareil mobile (100) selon la revendication 3, comprenant en outre :
la recherche d'un dispositif d'impression (250) correspondant aux informations de localisation de l'appareil mobile,
l'opération de transmission de la commande d'impression du contenu au dispositif d'impression transmettant la commande d'impression au dispositif d'impression recherché.

5. Méthode de gestion du contenu de l'appareil mobile (100) selon la revendication 1, les informations de localisation étant détectées par un système de positionnement mondial (GPS).

6. Méthode de gestion du contenu de l'appareil mobile (100) selon la revendication 1, le contenu correspondant aux informations de localisation étant un contenu utilisé dans une localisation correspondant aux informations de localisation, et étant des informations relatives au contenu enregistré dans le serveur (200).

7. Méthode de gestion du contenu d'un serveur (200) capable de communiquer avec un appareil mobile (100), comprenant :
la réception, en réponse à l'entrée de l'appareil mobile dans une région spécifique (10), définie par un utilisateur dans l'appareil mobile, d'informations de localisation pour la localisation de l'appareil mobile et d'informations de dispositif de l'appareil mobile provenant de l'appareil mobile, le serveur possédant un contenu correspondant aux informations de localisation de l'appareil mobile mémorisées préalablement dans celui-ci ;
la recherche du contenu correspondant aux informations de localisation reçues sur la base des informations de dispositif ;
la conversion d'une première résolution du contenu recherché correspondant aux informations de localisation de l'appareil mobile en une deuxième résolution lisible dans l'appareil mobile ;
la transmission du contenu converti à l'appareil mobile ; et
la réception d'une commande pour l'impression du contenu converti de l'appareil mobile en réponse à une entrée utilisateur pour l'impression du contenu converti sur l'appareil mobile,
le serveur possédant un pilote pour l'exécution d'une fonction d'impression sur un dispositif d'impression (250), et imprimant le contenu converti par le biais du dispositif d'impression à l'aide du pilote.

8. Méthode de gestion du contenu du serveur (200) selon la revendication 7, le contenu étant un contenu de document.

9. Méthode de gestion du contenu du serveur (200) selon la revendication 7, comprenant en outre la transmission d'une commande d'impression du contenu au dispositif d'impression (250).

10. Méthode de gestion du contenu du serveur (200) selon la revendication 9, comprenant en outre :
la recherche d'un dispositif d'impression (250) correspondant aux informations de localisation de l'appareil mobile (100),
l'opération de transmission de la commande d'impression du contenu au dispositif d'impression transmettant la commande d'impression au dispositif d'impression recherché.

11. Méthode de gestion du contenu d'un système de gestion du contenu comprenant un appareil mobile (100) et un serveur (200) capables de communiquer entre eux, comprenant :
l'affichage, à l'appareil mobile, en réponse à l'entrée de l'appareil mobile dans une région spécifique (10) définie par un utilisateur dans l'appareil mobile, d'un message indiquant que l'appareil mobile est entré dans la région spécifique ;
la transmission, à l'appareil mobile, en réponse à la réception d'une entrée de l'utilisateur lors de l'affichage du message, d'informations de localisation de l'appareil mobile, et d'informations de dispositif de l'appareil mobile au serveur, le serveur possédant un contenu correspondant aux informations de localisation de l'appareil mobile mémorisées préalablement dans celui-ci ;
la recherche, au serveur, du contenu correspondant aux informations de localisation sur la base des informations de dispositif ;
la transmission, au serveur, du contenu à l'appareil mobile ; et
la transmission, à l'appareil mobile, d'une commande pour l'impression du contenu au serveur en réponse à la réception d'une entrée de l'utilisateur pour l'impression du contenu,
le serveur identifiant, en réponse à la réception des informations de localisation de l'appareil mobile et des informations de dispositif de l'appareil mobile, l'appareil mobile sur la base des informations de dispositif de l'appareil mobile, convertissant une première résolution du contenu correspondant aux informations de localisation de l'appareil mobile en une deuxième résolution lisible dans l'appareil mobile, et transmettant le document converti, et
le serveur possédant un pilote pour l'exécution d'une fonction d'impression sur un dispositif d'impression (250), et imprimant le contenu converti à travers le dispositif d'impression en utilisant le pilote.
